# EUROPÄISCHE PATENTSCHRIFT

(11) **EP 3 609 292 B1**
(45) Veröffentlichungstag und Bekanntmachung des Hinweises auf die Patenterteilung: **14.06.2023**
(21) Anmeldenummer: 19187993.1
(22) Anmeldetag: 24.07.2019
(51) Int. Cl.: H05B 3/80, F24H 1/00, F24H 9/20, A01K 9/00, A01K 7/00, F24H 1/06

(54) **VORRICHTUNG ZUR ERWÄRMUNG VON FLÜSSIGKEITEN**
FLUID HEATING DEVICE
DISPOSITIF DE CHAUFFAGE DE LIQUIDES

(30) Priorität: 10.08.2018 DE 102018213529
(43) Veröffentlichungstag der Anmeldung: 12.02.2020
(73) Patentinhaber: Müller, Josef, 84428 Buchbach (DE)
(72) Erfinder: Müller, Josef, 84428 Buchbach (DE)
(74) Vertreter: Weickmann & Weickmann PartmbB

(56) Entgegenhaltungen:
- EP-A1- 1 228 731
- WO-A1-2004/039229
- CH-A- 361 622
- DE-A1- 2 051 140
- DE-A1-102005 003 768
- DE-A1-102010 008 412
- DE-A1-102016 120 085
- JP-U- S5 862 586
- KR-A- 20160 021 625
- US-A- 2 576 688
- US-A1- 2002 048 454

## Beschreibung

### I. Anwendungsgebiet

Die vorliegende Erfindung betrifft eine Vorrichtung zur Erwärmung von Flüssigkeiten, insbesondere von Milch zur Ernährung von Kälbern, sogenannter Kälbermilch. Die erfindungsgemäße Vorrichtung kann jedoch grundsätzlich auch zur Erwärmung anderer Flüssigkeiten dienen.

### II. Technischer Hintergrund

Aus der DE 10 2010 008 412 A1 ist bereits eine Vorrichtung zur Erwärmung von Kälbermilch mit den Merkmalen des Oberbegriffs des Anspruchs 1 bekannt. Die bekannte Vorrichtung weist eine Stange auf, an der ein ringförmiges Heizelement angebracht ist. Das Heizelement ist an dem Eintauchende der Stange angeordnet, mit welchem Letztere in die zu erwärmende Kälbermilch eingetaucht werden kann.

In das Eintauchende der Stange ist ein Temperatursensor zum Messen der Temperatur der Kälbermilch eingebettet.

Eine gesunde Ernährung von Kälbern erfordert die Erwärmung der Kälbermilch auf eine Solltemperatur von ca. 38° C. Diese Temperatur sollte möglichst genau eingehalten werden. Die bekannte Vorrichtung zur Erwärmung von Kälbermilch erwärmt Letztere regelmäßig auf deutlich zu niedrige Temperaturen. Dies liegt daran, dass der Temperatursensor in das Eintauchende eingebettet ist und das Eintauchende durch Leitung der von den Heizwendeln erzeugten Wärme von dem ringförmigen Heizelement in das Eintauchende derart erwärmt wird, dass der Temperatursensor der Heiz-Steuer-Einheit eine Temperatur meldet, die höher ist als die tatsächliche Temperatur der Kälbermilch. Somit wird die Kälbermilch mittels der bekannten Vorrichtung nicht auf die für eine gesunde Kälberernährung erforderliche Solltemperatur erwärmt.

Aus der JP 58-062586 U ist ein elektrischer Wasserkocher bekannt, bei welchem ein Heizelement in eine Heizplatte eingegossen ist. Ein Sensor 6 ist in einen Verbindungsbereich zwischen der Heizplatte und einem Handgriff eingebettet. Der Sensor 6 kann nicht in Kontakt mit dem zu erhitzenden Wasser gelangen.

Aus der DE 10 2005 003 768 A1 ist eine Messvorrichtung insbesondere zur Ermittlung der Temperatur in Bremsflüssigkeitsbehältern von Fahrzeugen bekannt, die einen Temperatursensor und ein Heizelement aufweist, welche voneinander beabstandet angeordnet sind.

Aus der US 2002/0048454 A1 ist ein Heizelement zur Erwärmung von Flüssigkeiten bekannt, das eine Heizwendel aufweist. Die Heizwendel ist von einem Aluminiumgehäuse umgeben, das mit einer Öffnung zur Aufnahme eines Thermostaten versehen ist.

Aus der EP 1 228 731 A1 ist eine Fritteuse mit einem Heizelement bekannt, an welchem ein Tauchwiderstand sowie ein Thermostat angebracht ist. Innenliegende Abschnitte des Heizelements werden von einem Klemmstück auf Abstand gehalten.

Aus der DE 2 051 140 A ist ein Tauchheizgerät mit einem Heizdraht bekannt, das zusätzlich ein Rohr aufweist, in welchem ein Temperaturfühler in Form eines elektrischen Widerstandes untergebracht ist. Der Widerstand unterbricht über eine einstellbare, elektronische Thermostatregeleinrichtung die Heizstromzufuhr bei Erreichen einer bestimmten Solltemperatur.

Aus der US 2,576,688 A ist eine elektrische Heizeinrichtung für Wassertanks bekannt, die eine Heizschleife und eine Thermostateinrichtung aufweist. Die Thermostateinrichtung umfasst eine Thermostatkapsel. Dies ist derart relativ zu der Heizschleife angeordnet, dass sie eine Temperatur misst, die in etwa der Temperatur des Wassers entspricht, welches die Heizschleife umgibt.

### III. Darstellung der Erfindung

### a) Technische Aufgabe

Es ist daher die Aufgabe der vorliegenden Erfindung, eine Vorrichtung zur Erwärmung von Flüssigkeiten, insbesondere von Kälbermilch, zu schaffen, mit deren Hilfe Flüssigkeiten, insbesondere Kälbermilch, zuverlässig auf eine gewünschte Solltemperatur erwärmt werden können bzw. kann.

### b) Lösung der Aufgabe

Diese Aufgabe wird mit einer Vorrichtung zur Erwärmung von Flüssigkeiten gelöst, welche die Merkmale des Anspruchs 1 oder des Anspruchs 4 aufweist. Weitere Ausgestaltungen der vorliegenden Erfindung ergeben sich aus den Unteransprüchen.

Erfindungsgemäß wird eine Vorrichtung zur Erwärmung von Flüssigkeiten, insbesondere von Kälbermilch, mit einem in die zu erwärmende Flüssigkeit eintauchbaren ringförmigen Heizelement vorgeschlagen, das einen Ringinnenraum aufweist. Mit dem Heizelement ist eine Stange verbunden, die ein Eintauchende zum Eintauchen in die zu erwärmende Flüssigkeit aufweist, wobei die Stange das Heizelement an dem Eintauchende trägt. Eine Heiz-Steuer-Einheit zum Steuern des Erwärmungsvorgangs mittels des Heizelements sowie ein Temperatursensor zum Messen der Temperatur der zu erwärmenden Flüssigkeit sind vorgesehen. Der Temperatursensor ist an dem Eintauchende der Stange angeordnet und steht mit der Heiz-Steuer-Einheit in Signalverbindung, um dieser Signale über die von ihm gemessene Temperatur liefern zu können. Das Heizelement ist als Standfuß zum standsicheren Abstellen der Vorrichtung auf einem Untergrund, beispielsweise dem Boden eines Eimers, ausgebildet. Das Heizelement weist außerdem eine dem Untergrund zugewandte Unterseite und eine von dem Untergrund abgewandte Oberseite auf.

Der Vorteil der erfindungsgemäßen Vorrichtung besteht darin, dass aufgrund des unmittelbaren Kontaktes eines Sensorschutzrohres mit der Flüssigkeit nennenswerte Verfälschungen des Temperaturmessergebnisses ausgeschlossen werden können. Wärmeleiteffekte, die von dem Heizelement erzeugte Wärme durch das Eintauchende der Stange an den Temperatursensor heran transportieren, werden erfindungsgemäß ausgeschaltet. Die gemessene Temperatur der Flüssigkeit entspricht im Wesentlichen der tatsächlichen Temperatur der Flüssigkeit, so dass die Erwärmung der Flüssigkeit auf eine vorgegebene Solltemperatur zuverlässig überwacht und damit stattfinden kann. Handelt es sich bei der Flüssigkeit um zu erwärmende Kälbermilch, so kann eine gesunde Ernährung der Kälber gewährleistet werden.

Es ist im Rahmen der vorliegenden Erfindung denkbar, dass sich der in dem Sensorschutzrohr angeordnete Temperatursensor in einer zumindest nach unten in Richtung des Untergrundes offenen Kammer des Eintauchendes befindet, in welche die zu erwärmende Flüssigkeit eindringen und das Sensorschutzrohr zumindest teilweise direkt berühren kann. Vorteilhaft ist jedoch, dass das Sensorschutzrohr aus dem Eintauchende der Stange herausragt. Es kann dann in einen Volumenbereich der zu erwärmenden Flüssigkeit eintauchen, der nicht wie im Fall der vorgenannten Kammer von Wandungen des Eintauchendes umgeben ist, die wärmer sein können als die gewünschte Solltemperatur und daher je nach deren Abstand von dem Temperatursensor diesen durch Wärmeübertragung und/oder Wärmestrahlung noch - wenn auch in deutlich geringerem Umfang als im Stand der Technik - eine etwas höhere Temperatur messen lassen könnten als sie die Flüssigkeit tatsächlich aufweist.

Das Sensorschutzrohr selbst kann grundsätzlich bündig mit der Oberfläche des Eintauchendes der Stange abschließen. Vorteilhaft ist es, das Sensorschutzrohr aus der Oberfläche des Eintauchendes herausragen zu lassen. Der aus dem Eintauchende herausragende außen liegende Teilbereich des Sensorschutzrohres kann dann von der zu erwärmenden Flüssigkeit gekühlt werden, wenn er von der von dem Heizelement über das Eintauchende herangeführten Wärme über die gewünschte Solltemperatur der Flüssigkeit hinaus erwärmt worden sein sollte.

Die vorliegende Erfindung schlägt eine Vorrichtung zur Erwärmung von Flüssigkeiten vor, bei welcher der Temperatursensor in einem nach unten Richtung Untergrund geschlossenen Sensorschutzrohr angeordnet ist. Das geschlossene Sensorschutzrohr ist durch das Eintauchende der Stange geführt und sein geschlossenes Ende ist derart freiliegend angeordnet, dass es durch Eintauchen des Heizelements in die Flüssigkeit zumindest teilweise unmittelbar mit der Flüssigkeit in Kontakt bringbar ist.

Die Anordnung des Temperatursensors innerhalb des geschlossenen Sensorschutzrohres schützt ihn bei der Handhabung der erfindungsgemäßen Vorrichtung insbesondere vor mechansichen Stößen. Das Sensorschutzrohr besteht zumindest in demjenigen Bereich, in welchem es den Temperatursensor aufnimmt, aus einem gut wärmeleitenden Material wie beispielsweise Kupfer oder Stahl. Dadurch kann gewährleistet werden, dass bei einem geschlossenen Sensorschutzrohr die von dem Temperatursensor gemessene Temperatur der Flüssigkeit im Wesentlichen der tatsächlichen Temperatur der Flüssigkeit entspricht.

Es ist im Rahmen der vorliegenden Erfindung denkbar, dass das Sensorschutzrohr in einer zumindest nach unten in Richtung des Untergrundes offenen Kammer des Eintauchendes endet, in welche die zu erwärmende Flüssigkeit eindringen und das Sensorschutzrohr zumindest teilweise direkt berühren kann. Bevorzugt ist, dass das Sensorschutzrohr aus dem Eintauchende heraus ragt.

Zur Vermeidung einer zu starken Erwärmung des Sensorschutzrohres durch Wärmeleitung von dem Heizelement in das Eintauchende ist das Sensorschutzrohr zumindest in einem innen liegenden Teilbereich, in welchem es innerhalb des Eintauchendes verläuft, von Wärmeisolierungsmitteln umgeben. Die Wärmeisolierungsmittel verhindern, dass das Sensorschutzrohr insbesondere in dem innen liegenden Teilbereich über die gewünschte Solltemperatur der Flüssigkeit hinaus erwärmt werden kann.

Alternativ oder zusätzlich zu den Wärmeisolierungsmitteln kann das Sensorschutzrohr in einer solchen Austrittsebene aus dem Eintauchende der Stange austreten, deren Abstand von der durch die Unterseite des Heizelements aufgespannten Ebene eine lichte Weite definiert, die ca. wenigstens 40 % der Höhe des Heizelements beträgt. Auf diese Weise kann ein außen liegender Teilbereich des Sensorschutzrohres mit einer frei in die zu erwärmende Flüssigkeit eintauchbaren Länge von ca. wenigstens 40 % der Höhe des Heizelements vorgesehen werden. Weiter bevorzugt ist eine lichte Weite LW von ca. wenigstens 60 % der Höhe H des Heizelements. Es wird dadurch bewirkt, dass das geschlossene Ende des Sensorschutzrohres, in dessen Bereich sich der Temperatursensor befindet, entsprechend weit von der Austrittsebene bzw. dem Eintauchende entfernt ist. Eine das Temperaturmessergebnis nennenswert verfälschende Wärmeleitung innerhalb des außen liegenden Teilbereichs des Sensorschutzrohres wird auf diese Weise unterbunden.

Das Heizelement weist einen zu seiner Ringumfangsrichtung senkrechten Querschnitt auf und enthält mehrere elektrische Heizwendeln, von denen jede von einer elektrischen Heizdrahtwindung gebildet wird. Die Heizdrahtwindungen gehen ineinander über, so dass die Summe der Heizwendeln eine einheitliche elektrische Heizdrahtleitung bildet, die von einer einzigen Energiequelle mit elektrischem Strom versorgt werden kann. Die entsprechende Ansteuerung der Heizdrahtleitung erfolgt mit Hilfe der Heiz-Steuer-Einheit.

Die Heizwendeln verlaufen in wenigstens zwei in Blickrichtung auf den Querschnitt des Heizelements übereinander befindlichen Heizebenen. Zwei oder mehr übereinander befindliche Heizebenen in dem Heizelement bewirken eine effektivere und damit schnellere Erwärmung der Flüssigkeit auf die gewünschte Solltemperatur.

Wenigstens zwei der Heizwendeln können mittels Wendelabstandhaltern voneinander beabstandet sein. Dadurch wird verhindert, dass die Heizwendeln ihren Abstand während des Gießvorgangs zur Herstellung des Heizelements und des Eintauchendes relativ zueinander verändern, was zu einer weniger effektiven Wärmeerzeugung sowie weniger effektiven Wärmeübertragung auf die Flüssigkeit führen kann.

In vorteilhafter Weise sind wenigstens drei Heizwendeln vorhanden, wobei wenigstens zwei Heizwendeln, die mittels der Wendelabstandhalter voneinander beabstandet sind, nebeneinander in einer der Heizebenen verlaufen.

Als für eine effektive Wärmeübertragung auf die zu erwärmende Flüssigkeit vorteilhaft hat es sich erwiesen, wenigstens eine erste elektrische Heizwendel in einer der Oberseite des Heizelements zugewandten Hälfte des Heizelements verlaufen zu lassen und wenigstens eine zweite elektrische Heizwendel in einer der Unterseite des Heizelements zugewandten Hälfte des Heizelements verlaufen zu lassen.

In Abhängigkeit von einer konkreten Geometrie des Querschnitts des Heizelements kann es vorteilhaft sein, in wenigstens einer der Heizebenen genau eine Heizwendel anzuordnen. Diese eine Heizwendel kann dann mittels Wandabstandhaltern von einer Ringwandung des Heizelements beabstandet werden, um einen gleichmäßigen Abstand der Heizwendel von allen Ringoberflächen des Heizelements zu gewährleisten. Dies führt in vorteilhafter Weise zu einer gleichmäßigen Erwärmung der Ringoberflächen sowie zu einer effektiven Wärmeübertragung von dem Heizelement auf die Flüssigkeit.

Schon im Stand der Technik hatte sich für den in Ringumfangsrichtung senkrechten Querschnitt des Heizelements eine Birnenform als vorteilhaft erwiesen. Der Erfinder hat nunmehr herausgefunden, dass die Wärmeübertragung von den Oberflächen des Heizelements auf die zu erwärmende Flüssigkeit besonders effektiv erfolgt, wenn der Schlankheitsgrad der Birnenform, der von dem Verhältnis der Höhe H der Birnenform zu der größten Breite B der Birnenform gebildet wird, größer oder gleich 2 ist.

### c) Ausführungsbeispiele

Nachfolgend werden Ausführungsbeispiele eines Standfußes einer erfindungsgemäßen Vorrichtung zur Erwärmung von Flüssigkeiten beispielhaft anhand der Zeichnungen beschrieben. Es zeigen:
- Fig. 1:: eine perspektivische Ansicht eines ersten Ausführungsbeispiels eines Standfußes einer erfindungsgemäßen Vorrichtung zur Erwärmung von Flüssigkeiten;
- Fig. 2:: eine Schnittansicht gemäß Schnitt A-A in Fig. 1;
- Fig. 3:: das Detail G aus Fig. 2 in vergrößerter Darstellung;
- Fig. 4:: das Detail H aus Fig. 2 in vergrößerter Darstellung;
- Fig. 4a:: das Detail H aus Fig. 2 in vergrößerter Darstellung mit aufgebrochenem Sensorschutzrohr;
- Fig. 5:: eine perspektivische Ansicht eines Heizwendelsystems für die erfindungsgemäße Vorrichtung zur Erwärmung von Flüssigkeiten; und
- Fig. 6:: eine Schnittansicht eines zweiten Ausführungsbeispiels eines Standfußes einer erfindungsgemäßen Vorrichtung zur Erwärmung von Flüssigkeiten, die in analoger Weise dem Verlauf des Schnittes A-A in Fig. 1 entspricht.

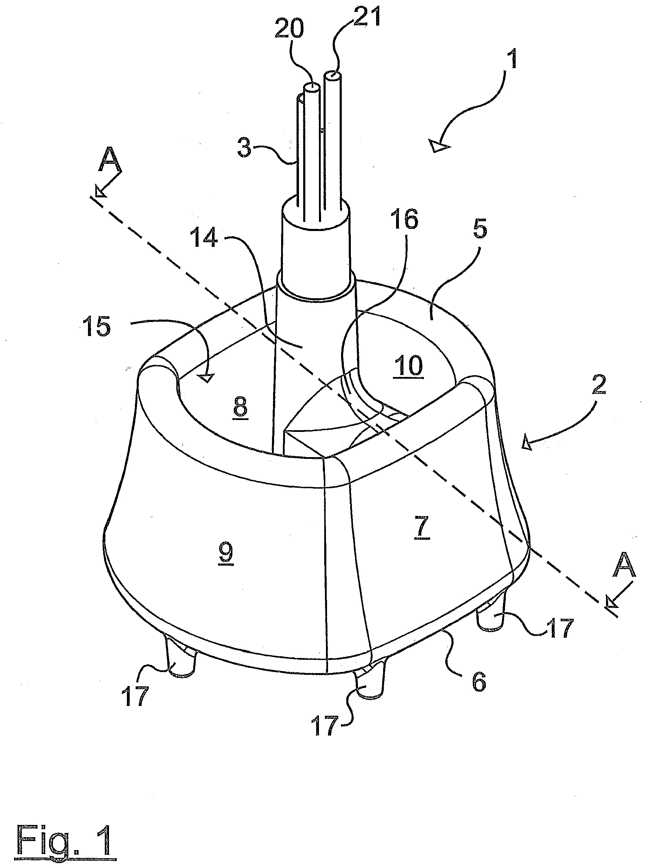

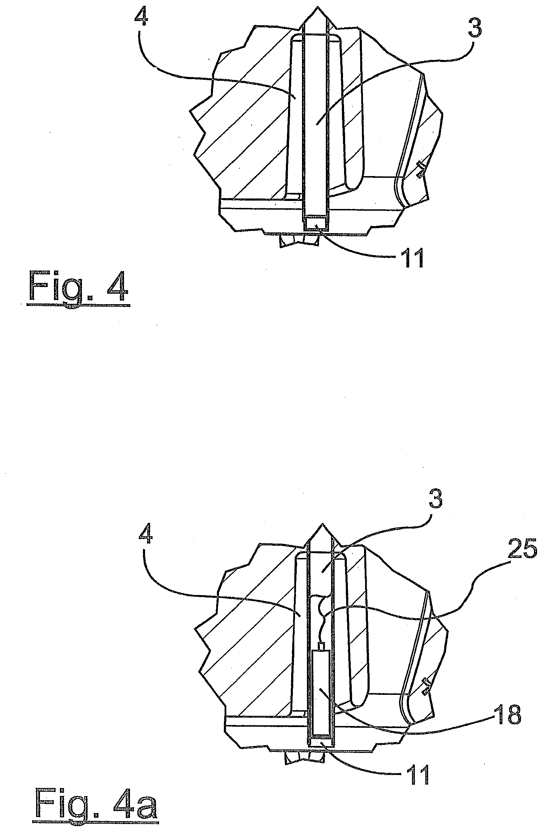

Fig. 1 zeigt einen Standfuß 1 eines Ausführungsbeispiels der erfindungsgemäßen Vorrichtung zur Erwärmung von Flüssigkeiten, insbesondere von Kälbermilch. Der Standfuß 1 ist als Aluminiumgusskörper ausgebildet. Ein Eintauchende 14 bildet den unteren Abschnitt einer mehrteiligen, nicht gezeigten Stange, an deren oberem Ende eine hier ebenso nicht gezeigte Heiz-Steuer-Einheit angeordnet ist. Die Stange sowie die Heiz-Steuer-Einheit können in an sich bekannter Weise beispielsweise so ausgebildet sein, wie es in Fig. 4 der DE 10 2010 008 412 A1 gezeigt und dort in Zusammenhang mit der vorgenannten Fig. 4 beschrieben ist.

Wie in Fig. 1 zu erkennen ist, weist der Standfuß 1 ein ringförmiges Heizelement 2 auf, das sich aus zwei geraden Wandabschnitten 7, 8 und zwei gekrümmt verlaufenden Wandabschnitten 9, 10 zusammensetzt. Das Eintauchende 14 der Stange ist in einem Ringinnenraum 15 des Heizelements 2 angeordnet und über einen Verbindungsabschnitt 16 mit dem Wandabschnitt 7 des Heizelements 2 verbunden. Das Heizelement 2 weist eine Oberseite 5 sowie eine Unterseite 6 auf, wobei an der Unterseite 6 insgesamt vier Abstandhalterbeine 17 angeordnet sind, von denen in Fig. 1 nur drei zu sehen sind.

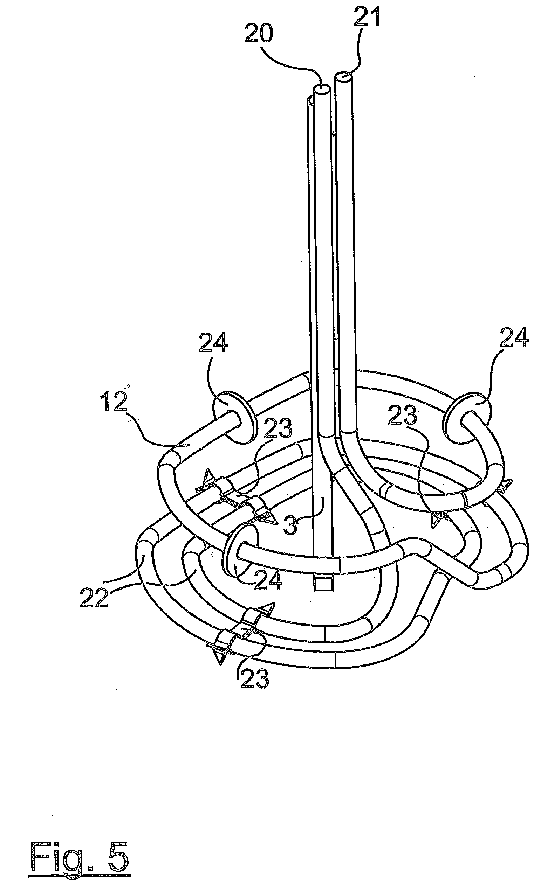

An dem in Fig. 1 oberen Ende des Eintauchendes 14 sind zwei Stromleitungen 20, 21 zu erkennen, welche das in Fig. 5 gezeigte und später beschriebene Heizwendelsystem mit Strom versorgen. Links hinter der Stromleitung 20 ist in Fig. 1 ein Sensorschutzrohr 3 zu erkennen, das einen in Fig. 4a gezeigten Temperatursensor 18 bzw. seine elektrische Signalleitung 25 zu der Heiz-Steuer-Einheit aufnimmt.

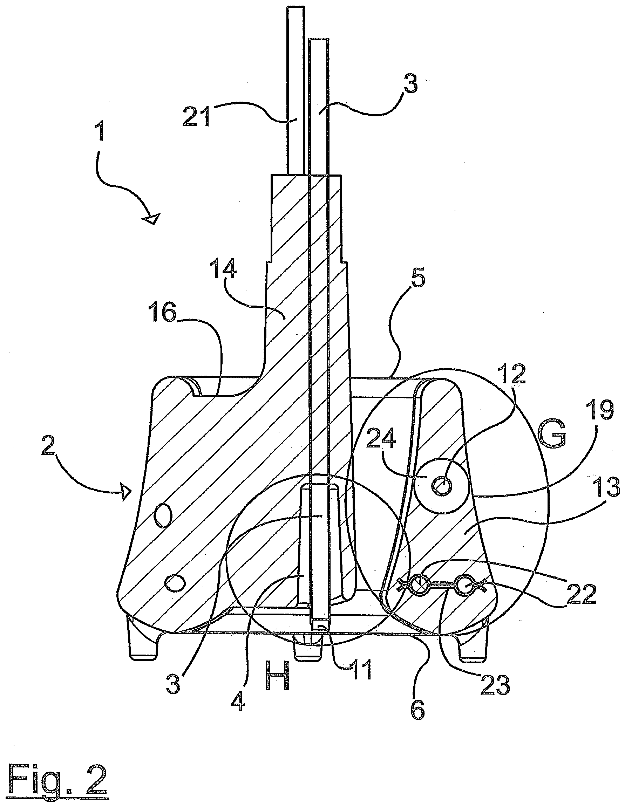

Fig. 2 zeigt den in Fig. 1 gekennzeichneten Schnitt A-A eines ersten Ausführungsbeispiels des Standfußes 1. Das Eintauchende 14, der Verbindungsabschnitt 16 und das Heizelement 2 sind als Aluminiumgusskörper einstückig ausgebildet. Das bei dem gezeigten Ausführungsbeispiel an seinem unteren Ende mit einem Verschlusselement, hier einem Verschlussstopfen 11, geschlossene Sensorschutzrohr 3 durchläuft das Eintauchende 14 und tritt an seinem in Fig. 2 unteren Ende aus dem Eintauchende 14 aus. In dem in Fig. 2 unteren Ende des Sensorschutzrohres 3 ist ein in Fig. 4a zu erkennender Temperatursensor 18 gelagert. Das Sensorschutzrohr 3 endet dabei ungefähr in der von der Unterseite 6 des Heizelements 2 aufgespannten Ebene und liegt für einen unmittelbaren Kontakt mit der zu erwärmenden Kälbermilch vollkommen frei. Die Kälbermilch kann das aus dem Eintauchende 14 heraus ragende Ende des Sensorschutzrohres 3direkt berühren. Dadurch kann eine Messung der tatsächlichen Temperatur der Kälbermilch erfolgen, ohne dass der Temperatursensor 18 von Wärme des aufgeheizten Aluminiums des Eintauchendes 14 beeinflusst und sein Messergebnis verfälscht wird. Bei dem Temperatursensor 18 handelt es sich beispielsweise um einen Widerstandstemperaturfühler vom Typ PT 100 in Stabform.

Um noch besser zu vermeiden, dass das Messergebnis des Temperatursensors 18 durch Wärmeleitung von dem Eintauchende 14 über das Sensorschutzrohr 3 zum Temperatursensor 18 beeinflusst werden kann, ist ein in dem Eintauchende 14 verlaufender innen liegender Teilbereich des Sensorschutzrohres 3 mit Hilfe von Wärmeisolierungsmitteln 4 gegenüber dem Aluminium des Eintauchendes 14 wärmeisoliert. Bei den Wärmeisolierungsmitteln 4 kann es sich beispielsweise um eine Hülse aus Keramik, Styrodur oder einem zu Letzterem ähnlichen Kunststoff handeln.

Der isolierte, innen liegende Teilbereich des Sensorschutzrohres 3 sowie die ihn isolierenden Wärmeisolierungsmittel 4 sind besser in Fig. 4 zu erkennen. Dort ist auch besser zu sehen, dass das untere Ende des Sensorschutzrohres 3 mit dem Verschlussstopfen 11 geschlossen ist. Alternativ ist beispielsweise denkbar, das Sensorschutzrohr 3 mittels eines Schraubverschlusses, eines Deckels oder durch Schweißen oder Löten zu verschließen.

In Fig. 4a ist das Sensorschutzrohr 3 in aufgebrochener Darstellung gezeigt. Es ist zu erkennen, wie der stabförmige Temperatursensor 18 in dem unteren Ende des Sensorschutzrohres 3 liegt.

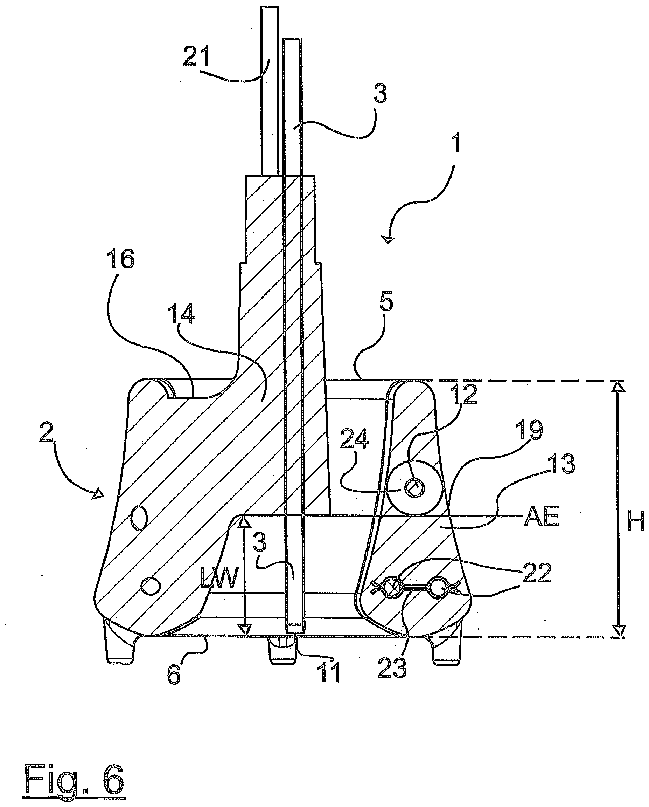

In Fig. 6 ist der entsprechend Fig. 1 verlaufende Schnitt A-A eines zweiten Ausführungsbeispiels des Standfußes 1 gezeigt. In Fig. 6 werden für einander entsprechende Bestandteile bzw. Elemente dieselben Bezugszeichen verwendet wie bei dem in den Fig. 1 und 2 gezeigten ersten Ausführungsbeispiel. Die Merkmale und Funktionen dieser Bestandteile bzw. Elemente sind dieselben wie diejenigen des ersten Ausführungsbeispiels und werden zur Vermeidung von Wiederholungen in Zusammenhang mit Fig. 6 nicht noch einmal beschrieben.

Das zweite Ausführungsbeispiel gemäß Fig. 6 unterscheidet sich von dem ersten Ausführungsbeispiel gemäß Fig. 2 dadurch, dass es keine Wärmeisolierungsmittel 4 aufweist. Stattdessen liegt das in Fig. 6 untere Ende des Sensorschutzrohres 3 im Wesentlichen über eine lichte Weite LW vollkommen frei, d.h. es verläuft außerhalb des Aluminiums des Eintauchendes 14. Die lichte Weite LW in Form eines Abstandes einer Austrittsebene AE, in welcher das Sensorschutzrohr 3 aus dem Eintauchende 14 austritt, von der von der Unterseite 6 des Heizelements 2 aufgespannten Ebene beträgt ca. wenigstens 40 % der Höhe H des Heizelements.

Bei dem zweiten Ausführungsbeispiel erfolgt die Wärmeisolierung eines vergleichsweise langen Teilbereichs des Sensorschutzrohres 3 somit dadurch, dass er unmittelbar der zu erwärmenden Kälbermilch ausgesetzt wird. Der außen liegende Teilbereich des Sensorschutzrohres 3 und der in ihm befindliche Temperatursensor 18 werden somit durch die Kälbermilch selbst gekühlt, wenn der Teilbereich des Sensorschutzrohres 3 durch Wärmeleitung von dem erhitzten Aluminium des Eintauchendes 14 über die gewünschte Solltemperatur der Kälbermilch hinaus erwärmt werden sollte.

Bei dem zweiten Ausführungsbeispiel gemäß Fig. 6 ist denkbar, einen innen liegenden Teilbereich des Sensorschutzrohres 3, der oberhalb der Austrittsebene AE innerhalb des Eintauchendes 14 verläuft, zusätzlich mit Wärmeisolierungsmitteln zu isolieren, wie sie bei dem ersten Ausführungsbeispiel gemäß Fig. 2 in Form der Wärmeisolierungsmittel 4 Anwendung finden. Dies würde den Temperatursensor 18 in dem unteren Ende des Sensorschutzrohres 3 noch besser vor verfälschenden Wärmeleitungseinflüssen schützen.

Fig. 5 zeigt eine perspektivische Ansicht eines Heizwendelsystems wie es in dem ersten Ausführungsbeispiel des Standfußes 1 gemäß Fig. 2 oder in dem zweiten Ausführungsbeispiel des Standfußes 1 gemäß Fig. 6 zur Anwendung kommen kann. Das Heizwendelsystem ist über die Stromleitungen 20, 21 mit der nicht gezeigten Heiz-Steuer-Einheit verbunden, die das Ein- bzw. Ausschalten des Heizbetriebs sowie das Einstellen der gewünschten Solltemperatur der Kälbermilch ermöglicht. Der Temperatursensor 18 steht über die durch das Sensorschutzrohr 3 hindurch geführte elektrische Signalleitung 25 (vgl. Fig. 4a) in Signalverbindung mit der Heiz-Steuer-Einheit. Stellt die Heiz-Steuer-Einheit auf Grundlage des ihr von dem Temperatursensor 18 zugeführten Temperatursignals fest, dass die eingestellte Solltemperatur in der zu erwärmenden Kälbermilch erreicht ist, so unterbricht sie die Stromzufuhr zu dem Heizwendelsystem und stellt damit den Heizbetrieb ein.

Wie in Fig. 5 zu erkennen ist, besteht das Heizwendelsystem bei dem gezeigten Ausführungsbeispiel aus einer einzigen elektrischen Heizdrahtleitung, deren insgesamt drei Heizwendeln 12, 22 in zwei übereinander angeordneten Heizebenen verlaufen. Eine erste elektrische Heizwendel 12 verläuft in einer oberen Heizebene, wie auch in den Fig. 2, 3 und 6 zu sehen ist. Die erste elektrische Heizwendel 12 geht schließlich in eine erste von zwei zweiten elektrische Heizwendeln 22, 22 über, die bei dem gezeigten Ausführungsbeispiel nebeneinander in einer unteren Heizebene verlaufen, wie auch in Fig. 2, 3 und 6 zu sehen ist.

Das in Fig. 5 gezeigte Heizwendelsystem wird bei der Herstellung des Standfußes 1 mit Aluminium umgossen. Um zu vermeiden, dass die Heizwendeln 12 und 22 beim Gießprozess aus ihrem geometrischen Sollverlauf verschoben werden, sind Wendelabstandhalter 23 für die beiden Heizwendeln 22 und Wandabstandhalter 24 für die Heizwendel 12 vorgesehen. Die in Fig. 5 gezeigten Wendelabstandhalter 23 sorgen dafür, dass die beiden Heizwendeln 22 auch nach dem Gießvorgang den vorgesehenen gleichmäßigen Abstand voneinander aufweisen. Die kreisscheibenförmig ausgestalteten Wandabstandhalter 24 sorgen dafür, dass die Heizwendel 12 einen vorgegebenen gleichmäßigen Abstand von den Oberflächen einer Ringwandung 19 des Heizelements 2 einhält. Dies ist insbesondere in den Fig. 2, 3 und 6 zu erkennen. Die äußeren Kreisumfangsflächen der Wandabstandhalter 24 stützen sich beim Gießvorgang im Wesentlichen im Wege einer Punktberührung an den Wandungen der Gießform ab.

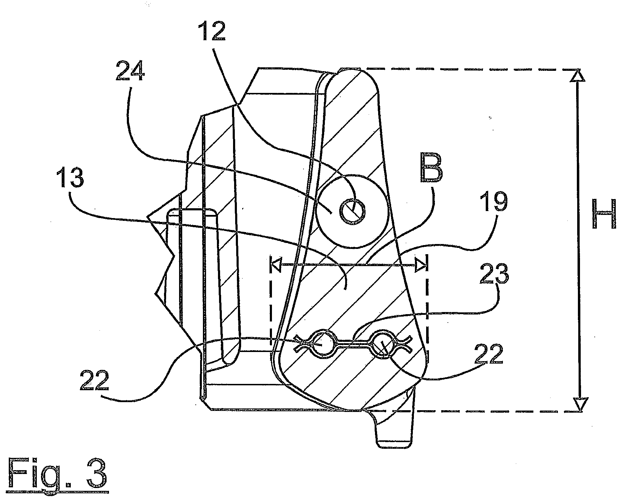

Wie den Fig. 2, 3 und 6 zu entnehmen ist, weist das ringförmige Heizelement 2 einen zu seiner Ringumfangsrichtung senkrechten Querschnitt 13 in Birnenform auf. Entsprechend Fig. 3 weist die Birnenform des Querschnitts 13 eine Höhe H sowie eine größte Breite B auf. Der Schlankheitsgrad H/B der gezeigten Birnenform, der von dem Verhältnis der Höhe H zu der größten Breite B gebildet wird, beträgt bei den gezeigten Ausführungsbeispielen ca. 2,3. Es hat sich herausgestellt, dass die Wärmeübertragung zwischen den Oberflächen der Ringwandung 19 und der zu erwärmenden Kälbermilch besonders effektiv ist, wenn der Schlankheitsgrad H/B größer oder gleich 2 ist. Die Anordnung von Heizwendeln sowohl in der in Fig. 3 unteren, breiten Hälfte der Birnenform als auch in der in Fig. 3 oberen, schmalen Hälfte der Birnenform hat sich ebenso als vorteilhaft erwiesen, da sie eine gleichmäßige Erwärmung des Heizelements 2 über seinen gesamten Querschnitt 13 ermöglicht.

Zum Erwärmen von Kälbermilch mit der erfindungsgemäßen Vorrichtung wird die Kälbermilch in einen Eimer oder einen ähnlichen Behälter eingefüllt. Anschließend wird die erfindungsgemäße Vorrichtung mit ihrem Standfuß 1 in die zu erwärmende Kälbermilch eingetaucht und mit ihren Abstandhalterbeinen 17 auf den Boden des Eimers gestellt. Der Standfuß 1 gewährleistet ein sicheres Stehen der gesamten Vorrichtung in dem Eimer.

Dann wird an der Heiz-Steuer-Einheit die gewünschte Solltemperatur der Kälbermilch eingestellt und der Heizvorgang gestartet. Die elektrisch beheizten Heizwendeln 12 und 22 erwärmen dann das aus Aluminium gegossene, ringförmige Heizelement 2, was dazu führt, dass Kälbermilch in dem Ringinnenraum 15 kaminzugartig aufsteigt und diesen an der Oberseite 5 des Heizelements 2 erwärmt verlässt. Gleichzeitig wird durch den, von den Abstandhalterbeinen 17 bewirkten Zwischenraum zwischen der Unterseite 6 des Heizelements 2 und dem Boden des Eimers kühlere Kälbermilch aus dem Raumbereich außerhalb des Heizelements 2 angesaugt und bei dem sich anschließenden Aufsteigen in dem Ringinnenraum 15 erwärmt.

Da sich der Temperatursensor 18 nur wenig oberhalb der von der Unterseite 6 des Heizelements 2 aufgespannten Ebene befindet, misst er stets die tatsächliche Temperatur der angesaugten, kühleren Kälbermilch. Dadurch wird in besonders vorteilhafter Weise gewährleistet, dass die Heiz-Steuer-Einheit den Heizvorgang erst dann unterbricht, wenn die angesaugte, kühlere Kälbermilch, deren Temperatur repräsentativ für die Temperatur des Großteils der in dem Eimer außerhalb des Heizelements 2 befindlichen Kälbermilch ist, die eingestellte Solltemperatur erreicht.

### Bezugszeichenliste

- 1: Standfuß einer Vorrichtung zur Erwärmung von Flüssigkeiten
- 2: Heizelement
- 3: Sensorschutzrohr
- 4: Wärmeisolierungsmittel
- 5: Oberseite des Heizelementes
- 6: Unterseite des Heizelementes
- 7: Gerader Wandabsschnitt
- 8: Gerader Wandabsschnitt
- 9: Gekrümmter Wandabschnitt
- 10: Gekrümmter Wandabschnitt
- 11: Verschlussstopfen
- 12: Heizwendel
- 13: Zur Ringumfangsrichtung senkrechter Querschnitt
- 14: Eintauchende
- 15: Ringinnenraum
- 16: Verbindungsabschnitt
- 17: Abstandhalterbeine
- 18: Temperatursensor
- 19: Ringwandung
- 20: Stromleitung
- 21: Stromleitung
- 22: Heizwendel
- 23: Wendelabstandhalter
- 24: Wandabstandhalter
- 25: Signalleitung des Temperatursensors 18

- H: Höhe der Birnenform
- B: Größte Breite der Birnenform
- AE: Austrittsebene
- LW: Lichte Weite

## Patentansprüche

1. Vorrichtung zur Erwärmung von Flüssigkeiten mit einem in die zu erwärmende Flüssigkeit eintauchbaren ringförmigen Heizelement (2) mit einem Ringinnenraum (10), einer mit dem Heizelement (2) verbundenen Stange, die ein Eintauchende (14) aufweist, an welchem sie das Heizelement (2) trägt, einer Heiz-Steuer-Einheit zum Steuern eines Erwärmungsvorganges mittels des Heizelements (2) und einem Temperatursensor (18) zum Messen der Temperatur der Flüssigkeit, der an dem Eintauchende (14) angeordnet ist und mit der Heiz-Steuer-Einheit in Signalverbindung steht, wobei das Heizelement (2) als Standfuß zum Abstellen auf einem Untergrund mit einer dem Untergrund zugewandten Unterseite (6) und einer von dem Untergrund abgewandten Oberseite (5) ausgebildet ist,
**dadurch gekennzeichnet, dass**
der Temperatursensor (18) in einem geschlossenen Sensorschutzrohr (3) angexordnet ist, welches durch das Eintauchende (14) geführt ist, wobei das Sensorschutzrohr (3) derart freiliegend angeordnet ist, dass es durch Eintauchen des Heizelements (2) in die Flüssigkeit zumindest teilweise unmittelbar mit der Flüssigkeit in Kontakt bringbar ist, und wobei das Sensorschutzrohr (3) zumindest in einem Teilbereich, in welchem es innerhalb des Eintauchendes (14) verläuft, von Wärmeisolierungsmitteln (4) umgeben ist.

2. Vorrichtung nach Anspruch 1,
**dadurch gekennzeichnet, dass**
das Sensorschutzrohr (3) aus dem Eintauchende (14) heraus ragt.

3. Vorrichtung nach einem der Ansprüche 1 oder 2,
**dadurch gekennzeichnet, dass**
das Sensorschutzrohr (3) in einer Austrittsebene (AE) aus dem Eintauchende (14) der Stange austritt, deren Abstand von der durch die Unterseite (6) des Heizelements (2) aufgespannten Ebene eine lichte Weite (LW) definiert, die ca. wenigstens 40% der Höhe (H) des Heizelements (2) beträgt.

4. Vorrichtung zur Erwärmung von Flüssigkeiten mit einem in die zu erwärmende Flüssigkeit eintauchbaren ringförmigen Heizelement (2) mit einem Ringinnenraum (10), einer mit dem Heizelement (2) verbundenen Stange, die ein Eintauchende (14) aufweist, an welchem sie das Heizelement (2) trägt, einer Heiz-Steuer-Einheit zum Steuern eines Erwärmungsvorganges mittels des Heizelements (2) und einem Temperatursensor (18) zum Messen der Temperatur der Flüssigkeit, der an dem Eintauchende (14) angeordnet ist und mit der Heiz-Steuer-Einheit in Signalverbindung steht, wobei das Heizelement (2) als Standfuß zum Abstellen auf einem Untergrund mit einer dem Untergrund zugewandten Unterseite (6) und einer von dem Untergrund abgewandten Oberseite (5) ausgebildet ist,
**dadurch gekennzeichnet, dass**
der Temperatursensor (18) in einem geschlossenen Sensorschutzrohr (3) angeordnet ist, welches durch das Eintauchende (14) geführt ist, wobei das Sensorschutzrohr (3) derart freiliegend angeordnet ist, dass es durch Eintauchen des Heizelements (2) in die Flüssigkeit zumindest teilweise unmittelbar mit der Flüssigkeit in Kontakt bringbar ist, und wobei das Sensorschutzrohr (3) in einer Austrittsebene (AE) aus dem Eintauchende (14) der Stange austritt, deren Abstand von der durch die Unterseite (6) des Heizelements (2) aufgespannten Ebene eine lichte Weite (LW) definiert, die ca. wenigstens 40% der Höhe (H) des Heizelements (2) beträgt.

5. Vorrichtung nach Anspruch 4,
**dadurch gekennzeichnet, dass**
das Sensorschutzrohr (3) zumindest in einem Teilbereich, in welchem es innerhalb des Eintauchendes (14) verläuft, von Wärmeisolierungsmitteln (4) umgeben ist.

6. Vorrichtung nach einem der vorangehenden Ansprüche,
**dadurch gekennzeichnet, dass**
das Heizelement (2) einen zu seiner Ringumfangsrichtung senkrechten Querschnitt (13) aufweist und mehrere elektrische Heizwendeln (12, 22) enthält, die in wenigstens zwei in Blickrichtung auf den Querschnitt (13) übereinander befindlichen Heizebenen verlaufen.

7. Vorrichtung nach Anspruch 6,
**dadurch gekennzeichnet, dass**
wenigstens zwei Heizwendeln (22) mittels Wendelabstandhaltern (23) voneinander beabstandet sind.

8. Vorrichtung nach Anspruch 7,
**dadurch gekennzeichnet, dass**
wenigstens drei Heizwendeln (12, 22) vorhanden sind und die wenigstens zwei Heizwendeln (22) nebeneinander in einer der Heizebenen verlaufen.

9. Vorrichtung nach einem der Ansprüche 6 bis 8,
**dadurch gekennzeichnet, dass**
wenigstens eine erste elektrische Heizwendel (12) in einer der Oberseite (5) zugewandten Hälfte des Heizelements (2) verläuft und wenigstens eine zweite elektrische Heizwendel (22) in einer der Unterseite (5) zugewandten Hälfte des Heizelements (2) verläuft.

10. Vorrichtung nach einem der Ansprüche 6 bis 9,
**dadurch gekennzeichnet, dass**
in wenigstens einer der Heizebenen genau eine Heizwendel (12) verläuft, die mittels Wandabstandhaltern (24) von einer Ringwandung (19) des Heizelements (2) beabstandet ist.

11. Vorrichtung nach einem der vorangehenden Ansprüche,
**dadurch gekennzeichnet, dass**
das Heizelement (2) einen zu seiner Ringumfangsrichtung senkrechten Querschnitt (13) mit Birnenform aufweist, die durch eine Höhe H und eine größte Breite B gekennzeichnet ist, wobei für einen durch das Verhältnis von Höhe H zu größter Breite B definierten Schlankheitsgrad der Birnenform H/B ≥ 2 gilt.

## Claims

1. Device for heating liquids by means of an annular heating element (2) which can be immersed in the liquid to be heated, the device having an annular interior (10), a rod which is connected to the heating element (2) and has an immersion end (14) on which said rod carries the heating element (2), a heating control unit for controlling a heating process by means of the heating element (2), and a temperature sensor (18) for measuring the temperature of the liquid, which sensor is arranged at the immersion end (14) and is in signal connection with the heating control unit, the heating element (2) being designed as a base for being set down on a substrate, which has a lower side (6) facing the base and an upper side (5) facing away from the base,
**characterised in that,**
the temperature sensor (18) is arranged in a closed sensor protection tube (3) which is guided through the immersion end (14), the sensor protection tube (3) being arranged so as to be exposed such that it can be brought into contact with the liquid at least partly directly by immersing the heating element (2), and the sensor protection tube (3) being surrounded by thermal insulation means (4) at least in a partial region in which said tube extends within the immersion end (14).

2. Device according to claim 1,
**characterised in that,**
the sensor protection tube (3) projects from the insertion end (14).

3. Device according to either claim 1 or claim 2,
**characterised in that,**
the sensor protection tube (3) exits from the immersion end (14) of the rod in an exit plane (AE), the distance of which from the plane spanned by the lower side (6) of the heating element (2) defines a clear width (LW) which is approximately at least 40% of the height (H) of the heating element (2).

4. Device for heating liquids by means of an annular heating element (2) which can be immersed in the liquid to be heated, the device having an annular interior (10), a rod which is connected to the heating element (2) and has an immersion end (14) on which said rod carries the heating element (2), a heating control unit for controlling a heating process by means of the heating element (2), and a temperature sensor (18) for measuring the temperature of the liquid, which sensor is arranged at the immersion end (14) and is in signal connection with the heating control unit, the heating element (2) being designed as a base for being set down on a substrate, which has a lower side (6) facing the base and an upper side (5) facing away from the base,
**characterised in that,**
the temperature sensor (18) is arranged in a closed sensor protection tube (3) which is guided through the immersion end (14), the sensor protection tube (3) being arranged so as to be exposed such that it can be brought into contact with the liquid at least partly directly by immersing the heating element (2), and the sensor protection tube (3) exiting from the immersion end (14) of the rod in an exit plane (AE), the distance of which from the plane spanned by the lower side (6) of the heating element (2) defines a clear width (LW) which is approximately at least 40% of the height (H) of the heating element (2).

5. Device according to claim 4,
**characterised in that,**
the sensor protection tube (3) is surrounded by thermal insulation means (4) at least in a partial region in which said tube extends within the immersion end (14).

6. Device according to any of the preceding claims,
**characterised in that,**
the heating element (2) has a cross section (13) which is perpendicular to its annular circumferential direction and contains a plurality of electrical heating coils (12, 22) which extend in at least two heating planes located one above the other when viewed in the cross section (13).

7. Device according to claim 6,
**characterised in that,**
at least two heating coils (22) are spaced apart from one another by means of coil spacers (23).

8. Device according to claim 7,
**characterised in that,**
at least three heating coils (12, 22) are present and the at least two heating coils (22) extend next to one another in one of the heating planes.

9. Device according to any of claims 6 to 8,
**characterised in that,**
at least one first electric heating coil (12) extends in a half of the heating element (2) facing the upper side (5) and at least one second electric heating coil (22) extends in a half of the heating element (2) facing the lower side (5).

10. Device according to any of claims 6 to 9,
**characterised in that,**
exactly one heating coil (12) extends in at least one of the heating planes, which heating coil is spaced apart by means of wall spacers (24) from an annular wall (19) of the heating element (2).

11. Device according to any of the preceding claims,
**characterised in that,**
the heating element (2) has a cross section (13) which is perpendicular to its annular circumferential direction and is **characterised by** a height H and a largest width B, the slenderness ratio of the pear shape defined by the ratio of height H to the greatest width B being H/B ≥ 2.

## Revendications

1. Dispositif pour chauffer des liquides avec un élément chauffant annulaire (2) pouvant être plongé dans le liquide à chauffer, avec un espace intérieur annulaire (10), une tige reliée à l'élément chauffant (2), qui présente une extrémité d'immersion (14) sur laquelle elle porte l'élément chauffant (2), une unité de commande de chauffage pour commander un processus de chauffage au moyen de l'élément chauffant (2) et un capteur de température (18) pour mesurer la température du liquide, qui est disposé à l'extrémité d'immersion (14) et qui est en liaison de signalisation avec l'unité de commande de chauffage, dans lequel l'élément chauffant (2) est réalisé sous la forme d'un pied à poser sur un support avec une face inférieure (6) tournée vers le support et une face supérieure (5) opposée au support,
**caractérisé en ce que**
le capteur de température (18) est disposé dans un tube de protection de capteur fermé (3) qui est guidé à travers l'extrémité d'immersion (14), dans lequel le tube de protection de capteur (3) est disposé de manière libre de telle sorte qu'il peut être mis en contact direct avec le liquide au moins partiellement par immersion de l'élément chauffant (2) dans le liquide, et dans lequel le tube de protection de capteur (3) est entouré de moyens d'isolation thermique (4) au moins dans une zone partielle dans laquelle il s'étend à l'intérieur de l'extrémité d'immersion (14).

2. Dispositif selon la revendication 1,
**caractérisé en ce que**
le tube de protection de capteur (3) fait saillie hors de l'extrémité d'immersion (14).

3. Dispositif selon l'une des revendications 1 ou 2,
**caractérisé en ce que**
le tube de protection de capteur (3) émerge de l'extrémité d'immersion (14) de la tige dans un plan de sortie (AE) dont la distance au plan défini par la face inférieure (6) de l'élément chauffant (2) définit une largeur libre (LW) qui représente environ au moins 40% de la hauteur (H) de l'élément chauffant (2).

4. Dispositif pour chauffer des liquides, comprenant un élément chauffant annulaire (2) pouvant être immergé dans le liquide à chauffer et avec un espace intérieur annulaire (10), une tige reliée à l'élément chauffant (2) qui présente une extrémité d'immersion (14) par laquelle elle porte l'élément chauffant (2), une unité de commande de chauffage pour commander le processus de chauffage au moyen de l'élément chauffant (2) et un capteur de température (18) pour mesurer la température du liquide, qui est disposé à l'extrémité d'immersion (14) et qui est en liaison de signalisation avec l'unité de commande de chauffage, dans lequel l'élément chauffant (2) est réalisé sous la forme d'un pied à poser sur un support avec une face inférieure (6) tournée vers le support et une face supérieure (5) détournée du support,
**caractérisé en ce que**
le capteur de température (18) est disposé dans un tube de protection de capteur (3) fermé, qui est guidé à travers l'extrémité d'immersion (14), le tube de protection de capteur (3) étant disposé de manière dégagée de telle sorte qu'il peut être mis en contact direct avec le liquide, au moins partiellement, par immersion de l'élément chauffant (2) dans le liquide, et le tube de protection de capteur (3) sortant de l'extrémité d'immersion (14) de la tige dans un plan de sortie (AE) dont la distance par rapport au plan défini par la face inférieure (6) de l'élément chauffant (2) définit une largeur intérieure (LW) qui est d'environ au moins 40% de la hauteur (H) de l'élément chauffant (2).

5. Dispositif selon la revendication 4,
**caractérisé en ce que**
le tube de protection de capteur (3) est entouré de moyens d'isolation thermique (4) au moins dans une zone partielle dans laquelle il s'étend à l'intérieur de l'extrémité d'immersion (14).

6. Dispositif selon l'une des revendications précédentes,
**caractérisé en ce que**
l'élément chauffant (2) présente une section transversale (13) perpendiculaire à sa direction périphérique annulaire et comprend plusieurs filaments électriques chauffants (12, 22) qui s'étendent dans au moins deux plans chauffants superposés en regardant la section transversale (13).

7. Dispositif selon la revendication 6,
**caractérisé en ce que**
au moins deux filaments chauffants (22) sont espacés l'un de l'autre au moyen d'écarteurs de filaments (23).

8. Dispositif selon la revendication 7,
**caractérisé en ce que**
il y a au moins trois filaments chauffants (12, 22) et que les au moins deux filaments chauffants (22) s'étendent côte à côte dans l'un des plans de chauffage.

9. Dispositif selon l'une des revendications 6 à 8,
**caractérisé en ce que**
au moins un premier filament électrique chauffant (12) s'étend dans une moitié de l'élément chauffant (2) tournée vers la face supérieure (5) et au moins un deuxième filament électrique chauffant (22) s'étend dans une moitié de l'élément chauffant (2) tournée vers la face inférieure (5).

10. Dispositif selon l'une des revendications 6 à 9,
**caractérisé en ce que**
dans au moins l'un des plans de chauffage exactement un filament chauffant (12) s'étend qui est espacé d'une paroi annulaire (19) de l'élément chauffant (2) au moyen d'écarteurs de paroi (24).

11. Dispositif selon l'une des revendications précédentes,
**caractérisé en ce que**
l'élément chauffant (2) présente une section transversale (13) perpendiculaire à sa direction périphérique annulaire en une forme de poire, qui est **caractérisée par** une hauteur H et une largeur maximale B, où pour un degré d'élancement de la forme de poire défini par le rapport entre la hauteur H et la largeur maximale B, on a H/B > 2.
